# FASCICULE DE BREVET EUROPEEN

(11) **EP 1 057 616 B1**
(45) Date de publication et mention de la délivrance du brevet: **16.10.2002**
(21) Numéro de dépôt: 00401514.5
(22) Date de dépôt: 29.05.2000
(51) Int. Cl.: B29C 70/20, B29B 11/16, B29C 70/54

(54) **Procédé de mise en forme d'un élément en matériau composite synthetique pour caisse de véhicule automobile**
Verfahren zur Herstellung eines Elementes aus synthetischem Verbundwerkstoff für eine Kraftfahrzeugkarosserie
Method for shaping an element from synthetic composite material for a car body

(30) Priorité: 01.06.1999 FR 9906888
(43) Date de publication de la demande: 06.12.2000
(73) Titulaire: Renault s.a.s., 92100 Boulogne Billancourt (FR)
(72) Inventeur: Miesch, Jean Claude, 93300 Aubervilliers (FR); Perrin, Frédéric, 92190 Meudon (FR)

(56) Documents cités:
- EP-A- 0 660 005
- EP-A- 0 691 197

## Description

L'invention concerne un procédé de mise en forme d'un élément lié à la caisse d'un véhicule automobile, et un gabarit pour la mise en oeuvre d'un tel procédé.

L'invention concerne plus particulièrement un procédé de mise en forme d'un élément lié à la caisse d'un véhicule automobile, notamment d'un élément de support d'organes mécaniques ou d'un élément de liaison au sol du véhicule, du type dans lequel l'élément est réalisé à partir d'une plaque horizontale initiale qui comporte un tissu de fibres composites parallèles longitudinales qui sont liées les unes aux autres par des liens transversaux, du type comportant une première étape au cours de laquelle la plaque initiale est imprégnée d'un liant thermoplastique, une deuxième étape au cours de laquelle la plaque est appliquée sur un gabarit chauffé, une troisième étape au cours de laquelle la plaque est refroidie à température ambiante, une quatrième étape au cours de laquelle la plaque est découpée selon un contour voulu, et une cinquième étape au cours de laquelle la plaque est placée dans un moule pour conformer l'élément définitif.

On connaît de nombreux exemples de procédés de mise en forme d'éléments réalisés à partir de plaques en tissu de fibres composites (voir par exemple EP 0 660 005).

Il s'agit pour la plupart de procédés dans lesquels la quatrième étape comprenant l'opération de découpe intervient après la troisième étape d'application sur le gabarit chauffé, au cours de laquelle la plaque a été déformée verticalement suivant une courbure déterminée.

La découpe est alors généralement réalisée à l'emporte pièce sans précaution particulière.

Lors d'une telle opération de découpe, en fonction du contour que l'on désire donner à l'élément, la plaque est découpée sans tenir compte du sens des fibres du tissu qui la composent. Il en résulte que les fibres du tissu sont coupées sur la quasi-totalité du pourtour de l'élément obtenu.

Ceci est particulièrement préjudiciable à une bonne tenue mécanique de l'élément définitif, surtout si celui-ci est destiné à résister à de fortes contraintes internes.

En effet, on a constaté que les fibres coupées du bord de l'élément supportaient mal des contraintes internes élevées et qu'ainsi le pourtour de l'élément pouvait être le siège d'amorces de rupture de l'élément.

Cet inconvénient est inacceptable pour un élément qui a vocation à constituer un élément de support d'organes mécaniques ou un élément de liaison au sol du véhicule, et qui est par conséquent destiné à transmettre des efforts importants.

Pour remédier à cet inconvénient, l'invention propose un procédé qui permet de limiter la présence de fibres coupées sur le pourtour de l'élément.

Dans ce but, l'invention propose un procédé du type précédemment décrit, caractérisé en ce que la deuxième étape du procédé comporte au moins une opération de déformation verticale de la plaque et au moins une opération de déviation transversale des fibres pour permettre, lors de la quatrième étape du procédé, une découpe sensiblement parallèle à la direction des fibres.

Selon d'autres caractéristiques du procédé objet de l'invention :
- la déformation verticale de la plaque est obtenue en appliquant la plaque sur un gabarit présentant la forme d'au moins un prisme droit de direction générale transversale,
- la déviation transversale des fibres est obtenue en bridant, respectivement par rapport à une surface d'appui fixe et une surface d'appui mobile du gabarit, au moins deux zones distinctes de la plaque qui suivent chacune une ligne de direction transversale, la surface d'appui mobile étant déplacée au moins parallèlement à la surface d'appui fixe pour infléchir les fibres comprises entre les deux zones suivant la direction transversale,
- les deux zones distinctes de la plaque sont rapprochées longitudinalement l'une de l'autre au cours de l'opération de déviation transversale des fibres,
- la plaque initiale est constituée d'un empilement de couches de tissu issues d'un même rouleau de tissu,
- la découpe de la plaque lors de la quatrième étape est réalisée par un outil de découpe à ultrasons.

L'invention propose aussi un gabarit pour la mise en oeuvre du procédé, caractérisé en ce que le gabarit comporte une juxtaposition de lames parallèles, qui comportent au moins une lame fixe et au moins une lame coulissante transversalement, sur lesquelles est bridée la plaque, les lames étant agencées suivant au moins deux facettes supérieures d'au moins un prisme droit de direction générale transversale.

Selon d'autres caractéristiques du gabarit réalisé conformément à l'invention :
- le gabarit comporte une surface d'appui fixe constituée d'une pluralité de lames fixes, et au moins un surface d'appui mobile, adjacente à la surface d'appui fixe constituée d'une pluralité de lames parallèles coulissantes les unes par rapport aux autres dans la direction transversale, les lames fixes et les lames coulissantes étant agencées, en section longitudinale, sensiblement suivant un profil de courbure déterminée,
- la surface d'appui fixe comporte à ses extrémités longitudinales des premières barrettes transversales de bridage qui s'étendent sur toute la surface d'appui fixe pour presser la plaque de tissu entre les premières barrettes et la surface d'appui fixe,
- la surface d'appui mobile comporte au moins à son extrémité longitudinale de jonction avec la surface d'appui fixe, au moins une deuxième barrette transversale de bridage qui s'étend sur la surface d'appui mobile pour presser la plaque de tissu entre la deuxième barrette de bridage et la surface d'appui mobile, et à son extrémité longitudinale libre, au moins une troisième barrette transversale de bridage qui s'étend sur la surface d'appui mobile pour presser la plaque de tissu entre la troisième barrette de bridage et la surface d'appui mobile,
- les lames parallèles coulissantes sont mobiles longitudinalement les unes par rapport aux autres entre deux positions dans lesquelles elles sont respectivement disjointes et jointes,
- la surface d'appui mobile comporte au moins une quatrième barrette transversale de bridage qui s'étend transversalement sur une lame parallèle coulissante de la surface d'appui mobile, à proximité de l'extrémité longitudinale de jonction de celle-ci, pour presser la plaque de tissu entre la quatrième barrette de bridage et la surface d'appui mobile,
- les lames coulissantes sont entraînées en coulissement transversal par des vérins.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un gabarit réalisé conformément à un premier mode de réalisation représenté selon une position de repos de ses lames coulissantes ;
- la figure 2 est une vue en perspective du gabarit selon le premier mode de réalisation de l'invention représenté selon une position active de déformation de ses lames coulissantes ;
- la figure 3 est une vue de dessus du gabarit selon le premier mode de réalisation de l'invention représenté selon une position de repos de ses lames coulissantes ;
- la figure 4 est une vue de dessus du gabarit selon le premier mode de réalisation de l'invention représenté selon une position active de déformation de ses lames coulissantes ;
- la figure 5 est une vue selon la figure 3 du gabarit selon le premier mode de réalisation de l'invention sur lequel est disposé un empilement de couches de tissu avant sa déformation ;
- la figure 6 est une vue selon la figure 4 du gabarit selon le premier mode de réalisation de l'invention sur lequel est disposé l'empilement de couches de tissu après sa déformation;
- la figure 7 est une vue en coupe suivant un plan P longitudinal vertical de l'empilement de couches de tissu ;
- la figure 8 est une vue de dessus de l'empilement de couches de tissu après sa déformation et avant sa découpe ;
- la figure 9 est une vue selon la figure 3 d'une partie centrale d'un gabarit réalisé conformément à un second mode de réalisation de l'invention sur lequel est disposé un empilement de couches de tissu avant sa déformation ; et
- la figure 10 est une vue selon la figure 4 d'une partie centrale d'un gabarit selon le second mode de réalisation de l'invention sur lequel est disposé l'empilement de couches de tissu après sa déformation.

Dans la description qui va suivre, des chiffres de référence identiques désignent des éléments identiques ou ayant des fonctions similaires.

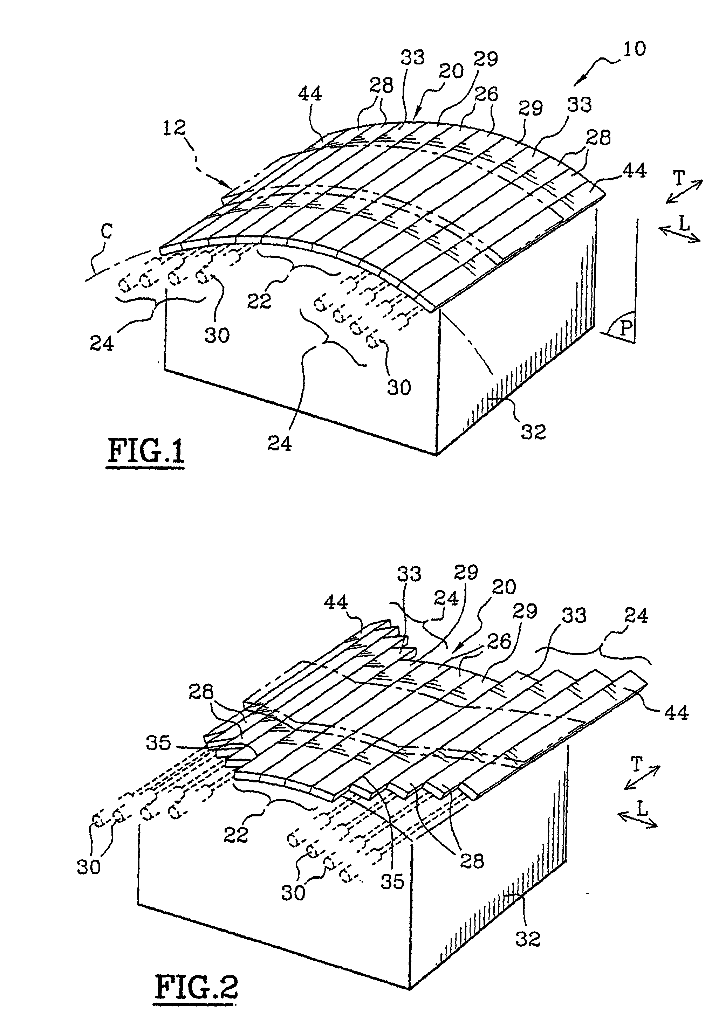

On a représenté aux figures 1 à 4 un gabarit 10 pour la mise en oeuvre du procédé selon un premier mode de réalisation de l'invention.

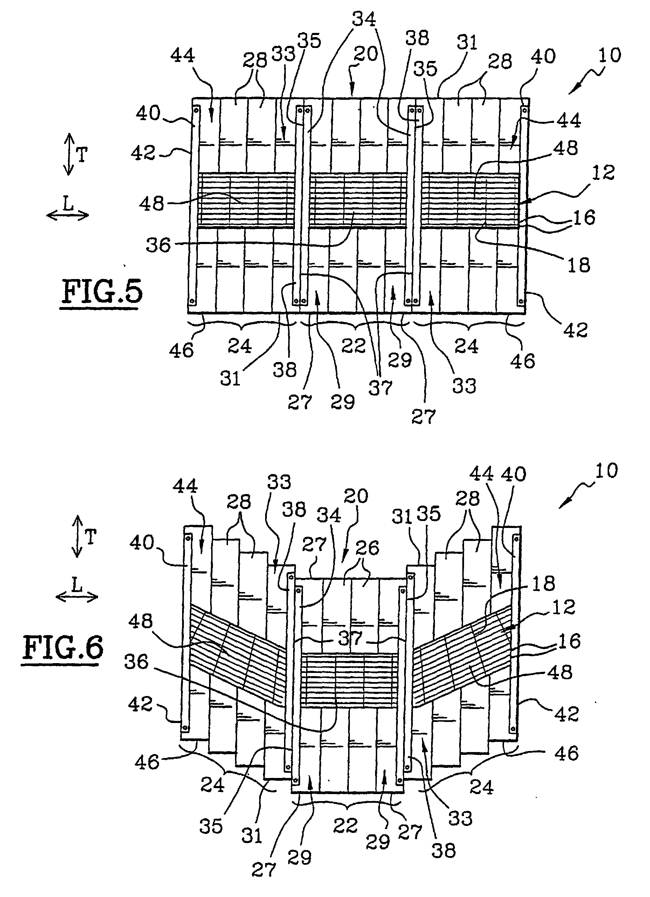

Comme l'illustrent les figures 5 et 6, le gabarit 10 est destiné à recevoir, pour la déformer verticalement et transversalement, une plaque initiale 12 sensiblement longitudinale et plane. Après sa déformation interviennent une étape de refroidissement et une étape de découpe, puis la plaque initiale 12 est, comme on le verra ultérieurement, placée dans un moule pour conformer un élément définitif, notamment un élément de support d'organes mécaniques ou un élément de liaison au sol d'un véhicule automobile.

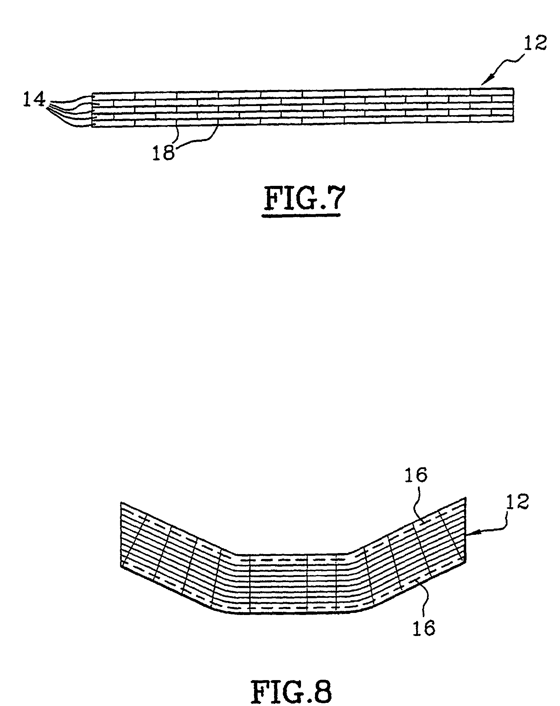

Comme l'illustrent les figures 5 et 7, la plaque initiale 12 est formée d'un empilement de couches 14 de tissu de fibres composites 16 de direction longitudinale "L". Les couches 14 sont avantageusement issues d'un ou de plusieurs rouleaux de tissu ayant les même caractéristiques dans lequel on découpe des pièces de tissu de longueur appropriée. Les fibres composites 16 d'une même couche 14 de tissu sont liées les unes aux autres par des liens 18 de direction transversale "T".

Comme l'illustre la figure 1, le gabarit 10 comporte une table d'appui 20 qui, dans un plan vertical et longitudinal P, est courbée suivant un profil C de courbure déterminée, qui correspond à la courbure verticale que l'on désire donner à la plaque initiale 12.

De manière connue, selon une première étape (non représentée) du procédé selon l'invention, la plaque 12 est imprégnée, par exemple par immersion ou vaporisation, d'un liant thermoplastique.

Puis, suivant une deuxième étape du procédé, la plaque 12 est appliquée sur le gabarit 10, comme l'illustrent les figures 1 et 5. Le gabarit 10 est chaud ou est chauffé pour être porté à une température supérieure à la température de fusion du liant thermoplastique dont est imprégné la plaque 12 de manière à permettre un ramollissement de ce liant thermoplastique, la plaque 12 épousant alors la forme de la table d'appui 20 de courbure C.

La table d'appui 20 du gabarit 10 présente la forme d'au moins un prisme droit direction générale transversale "T" perpendiculaire à la direction générale longitudinale "L" de la plaque initiale 12 et de ses fibres 16. En particulier, la table d'appui 20 présente, dans le mode de réalisation préféré de l'invention, une section trapézoïdale suivant le plan vertical de direction longitudinale "L".

Dans le mode de réalisation préféré de l'invention, la table d'appui 20 comporte une surface centrale d'appui fixe 22, de part et d'autre de laquelle sont agencées deux surfaces d'appui mobile 24.

La surface d'appui centrale fixe 22 est formée d'une pluralité de lames 26 parallèles, jointives, et de direction transversale "T" qui, dans le plan longitudinal P, sont chacune inclinées les unes par rapport aux autres de manière à former une partie centrale de la courbure C de la table d'appui 20.

D'une manière analogue, des surfaces latérales d'appui mobile 24 sont formées d'une pluralité de lames 28 parallèles, jointives, et de direction transversale "T", qui, dans le plan longitudinal P, sont inclinées les unes par rapport aux autres de manière à former les parties latérales d'extrémité de la courbure C de la table d'appui 20 qui sont complémentaires de la partie centrale de la courbure C pour former la totalité de la courbure C de la table d'appui 20.

Les lames 28 sont montées coulissantes transversalement les unes par rapport aux autres, et chaque lame 28 est susceptible d'être actionnée en coulissement transversal par un vérin 30 indépendant associé.

Dans le mode de réalisation préféré de l'invention, les vérins 30 sont des vérins hydrauliques, mais ils peuvent aussi être des vérins électriques ou des vérins mécaniques à vis.

Dans le mode de réalisation préféré de l'invention, le guidage transversal des lames 28 est réalisé, dans la mesure où les lames 28 sont suffisamment rigides, par une rainure latérale de chaque lame 28 qui coopère avec un rail de la lame 28 adjacente. En variante, le guidage en coulissement des lames 28 est assuré par des glissières (non représentées) qui sont agencées en dessous des lames 28 sur un bâti 32 du gabarit 10.

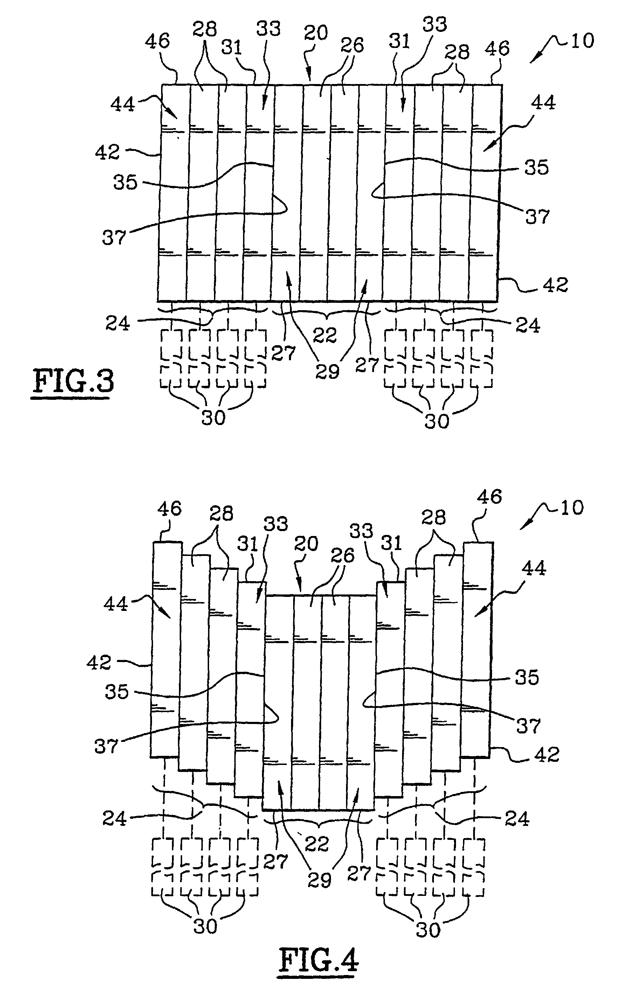

Comme l'illustrent les figures 2 et 4, les vérins 30 étant indépendants, la course transversale de chaque lame 28 est indépendante de la course des chacune des autres lames, ce qui permet avantageusement de déformer transversalement chaque surface d'appui mobile 24 de plusieurs façons.

Conformément à l'invention, la deuxième étape du procédé comporte au moins une opération de déviation transversale des fibres 16 de la plaque 12 pour permettre, lors de la quatrième étape du procédé, consécutive à la troisième étape de refroidissement de la plaque 12, une découpe de la plaque sensiblement parallèlement à la direction des fibres 16.

A cet effet, comme représenté aux figures 6 et 7, la plaque 12 est bridée sur la table d'appui 20.

A cet effet la table d'appui 20 comporte des premières barrettes 34 transversales de bridage qui sont agencées aux extrémités latérales 35 de la surface d'appui fixe 22, et qui s'étendent transversalement sur tout le long de la surface d'appui fixe 22, de manière à presser la plaque 12 entre ces premières barrettes 34 et la surface d'appui fixe 22, pour réaliser ainsi un bridage d'une partie centrale 36 de la plaque 12 sur la partie centrale fixe de la table d'appui 20.

Avantageusement, ces premières barrettes 34 sont fixées aux extrémités transversales 27 de lames 29 agencées aux extrémités latérales 35 de la surface fixe d'appui 22.

Par ailleurs, la table d'appui 20 comporte, comme illustré à la figure 6, des deuxièmes barrettes 38 transversales de bridage qui sont agencées aux extrémités latérales intérieures 37 de chaque surface d'appui mobile 24, adjacentes aux extrémités latérales 35 de la surface d'appui fixe 22, c'est à dire à la jonction de chacune des surfaces d'appui mobile 24 avec la surface centrale d'appui fixe 22.

En particulier, ces deuxièmes barrettes 38 transversales de bridage s'étendent transversalement sur tout le long de chaque surface d'appui mobile 24 de manière à presser la plaque 12 entre ces deuxièmes barrettes 38 et la surface d'appui mobile 24 associée de la table d'appui 20.

Avantageusement, ces deuxièmes barrettes 38 sont fixées aux extrémités transversales 31 de lames 33 d'extrémité latérale intérieure de la surface d'appui mobile 24.

Enfin, la table d'appui 20 comporte, comme illustré à la figure 6, des troisièmes barrettes 40 transversales de bridage qui sont agencées aux extrémités latérales extérieures opposées 42 de chaque surface d'appui mobile 24 de la table d'appui 20.

En particulier, ces troisièmes barrettes 40 transversales de bridage s'étendent transversalement le long de chaque surface d'appui mobile 24 de manière à presser la plaque 12 entre ces troisièmes barrettes 40 et la surface mobile 24.

Avantageusement, ces troisièmes barrettes 40 sont fixées aux extrémités transversales 46 de lames 44 d'extrémité latérale extérieure de la surface d'appui mobile 24.

Ainsi, les deuxièmes barrettes 38 et troisièmes barrettes 40 brident sur chacune des surfaces d'appui mobile 24 la partie correspondante d'extrémité latérale 48 de la plaque 12 qui est adjacente à la partie centrale 36 de la plaque 12.

De ce fait, selon la deuxième étape du procédé objet de l'invention, la plaque 12 peut être soumise à une déviation transversale de ses fibres 16.

Les figures 2 et 4 illustrent la configuration des lames 28 coulissantes permettant d'obtenir une déviation simple des fibres 16 de la plaque 12 suivant une forme de rayon de courbure progressif.

A cet effet, les vérins 30 permettent d'actionner en coulissement les lames 28, 33 et 44 de manière que les lames 28 ,33 et 44 soient de plus en plus éloignées transversalement de leur position de repos à mesure qu'elles sont éloignées latéralement de la surface fixe d'appui 22. Ce déplacement transversal croissant des lames 28, 33, et 44 coulissantes permet d'imprimer aux fibres 16 de la plaque 12 la déformation transversale appropriée à la future découpe de la plaque lors de la quatrième étape de découpe.

Dans ce premier mode de réalisation de l'invention, toutes les lames 28 coulissantes ont été actionnées pour accompagner le mouvement de glissement de la plaque 12 en tissu lors de la déformation transversale des fibres 16.

Toutefois, il est aussi possible de ne pas actionner ces lames 28 coulissantes pour peu qu'elles soient recouvertes d'un matériau comme du polytétrafluoroéthylène, commercialisé sous la marque "téflon", qui permet le glissement de la plaque 12. A ce titre, il serait possible d'envisager une version simplifiée (non représentée) de la table d'appui mobile 24 qui ne comporterait que des lames 44 d'extrémité extérieure.

De plus, ce mode de déformation transversal n'est pas limitatif de l'invention. Il suffit en effet que, en variante (non représentée), on dispose d'au moins une barrette intermédiaire de bridage fixée sur une lame 28 coulissante intermédiaire, par exemple une lame 28 du milieu d'une surface d'appui mobile 24, pour être à même d'obtenir une déformation suivant deux sens transversaux et opposés de déformation.

Ainsi, il suffit par exemple que les vérins 30 actionnent en coulissement une première série de lames 28 comprises entre la lame d'extrémité intérieure 31 et cette lame 28 intermédiaire suivant un coulissement de déplacement transversal croissant qui provoque une première déviation transversale des fibres 16 de la plaque 12, et que les vérins 30 actionnent en coulissement une deuxième série de lames 28 comprises entre cette lame 28 intermédiaire et la lame d'extrémité extérieure 44 suivant un coulissement de déplacement transversal décroissant qui provoque une deuxième déviation transversale des fibres 16 de la plaque 12, pour obtenir une déformation transversale de la plaque 12 suivant deux sens transversaux et opposés.

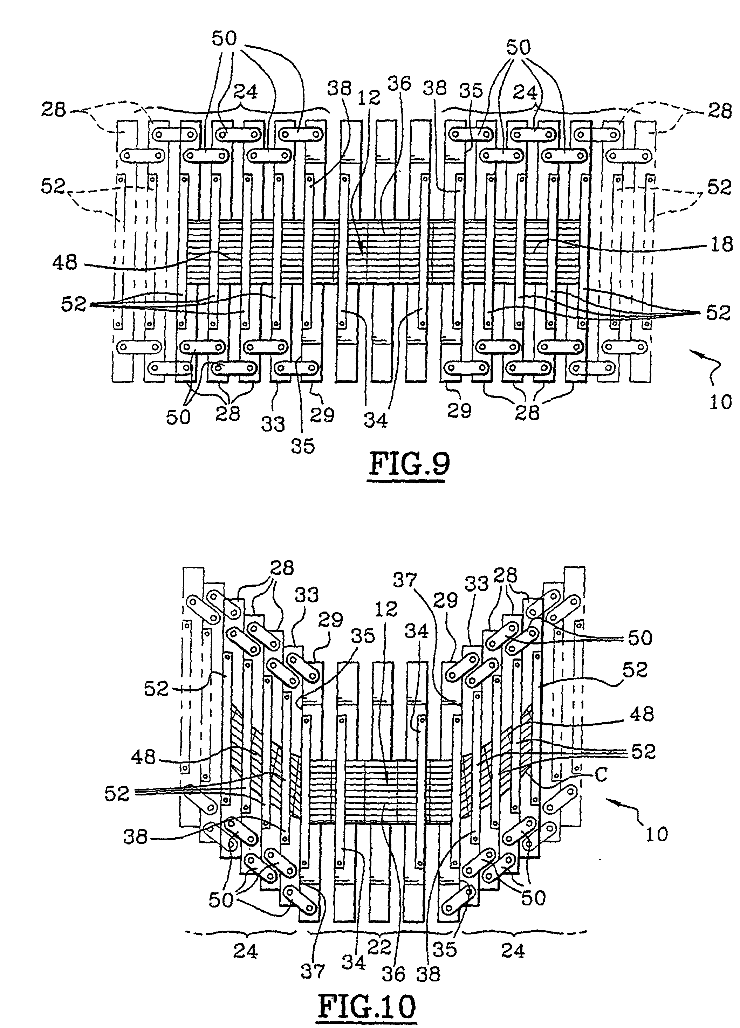

Les figures 9 et 10 illustrent un second mode de réalisation de la table d'appui 20 dans lequel les lames 28 sont montées coulissantes transversalement et mobiles longitudinalement les unes par rapport aux autres. On a représenté uniquement une partie centrale de la table d'appui 20, c'est à dire la partie d'appui fixe 22 et des zones des parties d'appui mobiles 24 qui sont situées à -proximité de cette partie d'appui fixe 22. Les parties d'appui mobiles 24 représentées en pointillés se prolongent jusqu'aux lames d'extrémité extérieures (non représentées) qui sont similaires à celles décrites en référence aux figures 5 et 6.

Dans ce second mode réalisation, chaque lame coulissante intermédiaire 28 est susceptible d'être actionnée en coulissement transversal par un vérin 30 indépendant associé similaire à celui décrit en référence au premier mode de réalisation, et chaque lame est articulée par rapport à la lame 28 voisine par deux biellettes 50 agencées aux deux extrémités de ladite lame intermédiaire 28. Les biellettes 50 lient ainsi les lames intermédiaires 28 suivant une série de parallélogrammes déformables dont deux côtés sont formés par ces lames coulissantes intermédiaires 28 et dont les deux autres sont formés par les biellettes 50.

Les lames 28 sont par ailleurs articulées de la même façon sur les lames coulissantes d'extrémité intérieure 33 et sur les lames d'extrémité extérieure (non représentées).

De plus, les lames coulissantes d'extrémité intérieure 33 sont articulées de la même façon sur les lames 29 qui sont agencées aux extrémités latérales 35 de la surface fixe d'appui 22.

Dans le second mode de réalisation de l'invention, le guidage transversal des lames intermédiaire 28, d'extrémité intérieure 33, ou d'extrémité extérieure est réalisé par un moyen de guidage transversal de chaque lame intermédiaire 28, d'extrémité intérieure 33, ou d'extrémité extérieure, par exemple par des glissières (non représentées) qui sont agencées en dessous des lames 28 sur le bâti 32 du gabarit 10.

D'une façon analogue au premier mode de réalisation de l'invention, les vérins 30 étant indépendants, la course transversale de chaque lame 28 est, dans la limite du coulissement transversal relatif maximum permis par les biellettes 50 entre deux lames intermédiaires 28, d'extrémité intérieure 33, et d'extrémité extérieure (non représentée), indépendante de la course des chacune des autres lames, ce qui permet avantageusement de déformer transversalement chaque surface d'appui mobile 24 de plusieurs façons.

Ainsi comme l'illustrent les figures 9 et 10, les lames parallèles coulissantes 28 et 33 sont mobiles longitudinalement les unes par rapport aux autres entre une position dans laquelle elles sont disjointes, qui est représentée à la figure 9, et une position dans laquelle elles sont jointes, qui est représentée à la figure 10.

En particulier, les lames parallèles coulissantes 28 et 33 sont mobiles, du fait de leur articulation par les biellettes 50 suivant les parallélogrammes déformables, entre la position disjointe dans laquelle elles sont transversalement au repos, comme illustré à la figure 9, et la position jointe, représentée à la figure 10, dans laquelle elles sont commandées en éloignement transversal par les vérins 30.

Ainsi, l'éloignement transversal relatif de chaque lame 28 ou 33 par rapport à la lame 28 ou 33 voisine est proportionnel à l'écartement longitudinal qui les sépare.

Avantageusement, l'actionnement des vérins 30 indépendamment les uns des autres permet donc de faire varier indépendamment non seulement l'éloignement transversal des lames intermédiaire 28, d'extrémité intérieure 33 ou d'extrémité extérieure (non représentée), mais aussi de les écarter longitudinalement indépendamment plus ou moins les unes des autres.

D'une façon analogue au premier mode de réalisation de la table d'appui 20, lors de la deuxième étape du procédé, la plaque 12 est bridée sur la table d'appui 20.

Ainsi, d'une façon analogue au premier mode de réalisation de la table d'appui 20, la table d'appui 20 comporte des premières barrettes 34 transversales de bridage, des deuxièmes barrettes 38 transversales de bridage, et des troisièmes barrettes transversales de bridage (non représentées).

Toutefois, dans ce second mode de réalisation, la surface d'appui mobile 24 comporte au moins une quatrième barrette 52 transversale de bridage qui s'étend transversalement sur une lame parallèle coulissante 28 de la surface d'appui mobile 24, qui est agencée à proximité de l'extrémité longitudinale 37 de jonction de celle-ci, pour presser la plaque 12 de tissu entre la quatrième barrette 52 de bridage et la surface d'appui mobile 24.

Dans ce second mode de réalisation de l'invention, la surface d'appui 24 comporte quatre lames coulissantes 28 qui comportent des barrettes transversales de bridage pour permettre une déviation progressive des fibres 16 de la plaque 12. En particulier, les deux lames coulissantes 33 d'extrémité intérieure comportent chacune une deuxième barrette transversale de bridage 38 et les lames intermédiaires 28 comportent chacune une quatrième barrette transversale de bridage 52.

Avantageusement, ces quatrièmes barrettes 52 sont aussi fixées aux extrémités transversales des lames coulissantes 28 intermédiaires de la surface d'appui mobile 24.

Ainsi, les premières barrettes 34, deuxièmes barrettes 38, troisièmes barrettes (non représentées), et quatrièmes barrettes 52 brident sur chacune des surfaces d'appui mobile 24 une zone de la partie 48 d'extrémité latérale de la plaque 12 qui est adjacente à la partie centrale 36 de la plaque 12.

De ce fait, selon la deuxième étape du procédé objet de l'invention, la plaque 12 peut être soumise à une déviation progressive transversale de ses fibres 16 dans cette portion, avec une courbure progressive, comme l'illustre la courbure progressive C représenté à la figure 10.

La figure 10 illustre la configuration des lames 28 coulissantes permettant d'obtenir une déviation simple des fibres 16 de la plaque 12 suivant une forme de rayon de courbure C progressif.

A cet effet, les vérins 30 permettent notamment d'actionner en coulissement les lames 28, 33 et 44 de manière que les lames 28 ,33 et 44 soient de plus en plus éloignées transversalement de leur position de repos à mesure qu'elles sont éloignées latéralement de la surface fixe d'appui 22. Ce déplacement transversal croissant des lames 28, 33, et 44 coulissantes s'accompagne d'un rapprochement longitudinal des lames 28 les une par rapport aux autres et permet d'imprimer aux fibres 16 de la plaque 12 la déformation transversale appropriée à la future découpe de la plaque lors de la quatrième étape de découpe sans les solliciter, la déviation transversale locale de chaque fibre, qui tend à la solliciter en traction, étant compensée par la compression longitudinale locale de chaque fibre du fait du rapprochement des lames 28 simultanément à leur éloignement transversal.

Il sera entendu que le nombre de lames intermédiaires 28 comportant des quatrièmes barrettes 52 transversales de bridage n'est pas limitatif de l'invention et qu'un bridage comportant plus de quatrièmes barrettes 52 peut être envisagé.

Ce mode de déformation transversal n'est pas limitatif de l'invention, et on peut aussi obtenir une déformation de la plaque 12 suivant au moins deux sens transversaux et opposés de déformation (non représentés).

A l'issue de cette deuxième étape de déformation de la plaque 12, le gabarit 10 est refroidi lors de la troisième étape, de façon que le liant thermoplastique dont est imprégné la plaque 12 se fige et devienne à nouveau rigide. On découpe alors, la plaque 12 sensiblement parallèlement à ses fibres 16, qui sont représentées en pointillés sur la figure 8, lors d'une quatrième étape du procédé. Cette opération de découpe peut être réalisée à l'emporte-pièce, mais est préférentiellement réalisée par un outil de découpe à ultrasons manipulé par un bras de robot, de manière que la découpe soit régulière et de grande précision. Enfin, lors d'une cinquième étape du procédé objet de l'invention, la plaque 12 est placée dans un moule pour conformer l'élément définitif, notamment par injection de résine synthétique, par exemple de la résine époxy.

Ainsi le procédé selon l'invention permet d'obtenir un élément de grande précision dimensionnelle et de haute résistance aux contraintes internes, puisqu'il ne présente sur ses bords qu'un minimum de fibres 16 coupées, limitant ainsi les amorces de rupture.

## Revendications

1. Procédé de mise en forme d'un élément lié à la caisse d'un véhicule automobile, notamment d'un élément de support d'organes mécaniques ou d'un élément de liaison au sol du véhicule, du type dans lequel l'élément est réalisé à partir d'une plaque (12) horizontale initiale qui comporte un tissu (14) de fibres (16) composites parallèles longitudinales qui sont liées les unes aux autres par des liens (18) transversaux, du type comportant une première étape au cours de laquelle la plaque (12) initiale est imprégnée d'un liant thermoplastique, une deuxième étape au cours de laquelle la plaque (12) est appliquée sur un gabarit (20) chauffé, une troisième étape au cours de laquelle la plaque (12) est refroidie à température ambiante, une quatrième étape au cours de laquelle la plaque est découpée selon une forme voulue, et une cinquième étape au cours de laquelle la plaque (12) est placée dans un moule pour conformer l'élément définitif, procédé dans lequel
la deuxième étape du procédé comporte au moins une opération de déformation verticale de la plaque et au moins une opération de déviation transversale des fibres (16) pour permettre, lors de la quatrième étape du procédé, une découpe sensiblement parallèle à la direction (L) des fibres (16).

2. Procédé selon la revendication précédente, **caractérisé en ce que** la déformation verticale de la plaque (12) est obtenue en appliquant la plaque sur un gabarit (20) présentant la forme d'au moins un prisme droit de direction générale transversale (T).

3. Procédé selon l'une quelconque des revendications précédentes, **caractérisé en ce que** la déviation transversale des fibres (16) est obtenue en bridant, respectivement par rapport à une surface d'appui fixe (22) et une surface d'appui mobile (24) du gabarit (20), au moins deux zones distinctes de la plaque (12) qui suivent chacune une ligne de direction transversale (T), la surface d'appui mobile (24) étant déplacée au moins parallèlement à la surface d'appui fixe (22) pour infléchir les fibres (16) comprises entre les deux zones suivant la direction transversale (T).

4. Procédé selon la revendication 3, **caractérisé en ce que** les deux zones distinctes de la plaque (12) sont rapprochées longitudinalement l'une de l'autre au cours de l'opération de déviation transversale des fibres (16).

5. Procédé selon l'une quelconque des revendications précédentes, **caractérisé en ce que** la plaque (12) initiale est constituée d'un empilement de couches (14) de tissu issues de rouleaux de tissu du même type.

6. Procédé selon l'une quelconque des revendications précédentes, **caractérisé en ce que** la découpe de la plaque (12) lors de la quatrième étape est réalisée par un outil de découpe à ultrasons.

7. Gabarit (20) pour la mise en forme d'un élément lié à la caisse d'un véhicule automobile, notamment d'un élément de support d'organes mécaniques ou d'un élément de liaison au sol du véhicule, du type dans lequel l'élément est réalisé à partir d'une plaque (12) horizontale initiale qui comporte un tissu de fibres (16) composites parallèles de même direction longitudinale (L) qui sont liées les unes aux autres par des liens (18) transversaux, du type dans lequel la plaque (12) initiale est imprégnée d'un liant thermoplastique, puis appliquée sur le gabarit (20) chauffé, puis refroidie à température ambiante pour former une ébauche, puis découpée selon une forme voulue, et enfin placée dans un moule pour conformer l'élément définitif,
le gabarit (20) comportant une juxtaposition de lames (26, 28, 29, 33, 44) parallèles, qui comportent au moins une lame fixe (29) et au moins une lame (33) coulissante transversalement, sur lesquelles est bridée la plaque (12), les lames (29, 33) étant agencées suivant au moins deux facettes supérieures d'au moins un prisme droit de direction générale transversale (T).

8. Gabarit (20) selon la revendication 7, **caractérisé en ce qu'**il comporte une surface d'appui fixe (22) constituée d'une pluralité de lames (26, 29) fixes, et au moins un surface d'appui mobile (24), adjacente à la surface d'appui fixe (22) constituée d'une pluralité de lames (28, 33, 44) parallèles coulissantes les unes par rapport aux autres dans la direction transversale (T), les lames (26, 29) fixes et les lames (28, 33, 44) coulissantes étant agencées, en section longitudinale, sensiblement suivant un profil (C) de courbure déterminée.

9. Gabarit (20) selon la revendication 8, **caractérisé en ce que** la surface d'appui fixe (22) comporte à ses extrémités longitudinales des premières barrettes (34) transversales de bridage qui s'étendent sur toute la surface d'appui fixe (22) pour presser la plaque (12) de tissu entre les premières barrettes (34) et la surface d'appui fixe (22).

10. Gabarit (20) selon l'une des revendications 8 ou 9, **caractérisé en ce que** la surface d'appui mobile (24) comporte au moins:
- à son extrémité longitudinale (37) de jonction avec la surface d'appui fixe (22), au moins une deuxième barrette (38) transversale de bridage qui s'étend sur la surface d'appui mobile (24) pour presser la plaque (12) de tissu entre la deuxième barrette (38) de bridage et la surface d'appui mobile (22), et
- à son extrémité longitudinale (42) libre, au moins une troisième barrette (40) transversale de bridage qui s'étend sur la surface d'appui mobile (24) pour presser la plaque (12) de tissu entre la troisième barrette (40) de bridage et la surface d'appui mobile (24).

11. Gabarit (20) selon l'une quelconque des revendications 8 à 10, **caractérisé en ce que** les lames parallèles coulissantes (28, 33, 44) sont mobiles longitudinalement les unes par rapport aux autres entre deux positions dans lesquelles elles sont respectivement disjointes et jointes.

12. Gabarit (20) selon la revendication 11, **caractérisé en ce que** la surface d'appui mobile (24) comporte au moins une quatrième barrette (52) transversale de bridage qui s'étend transversalement sur une lame parallèle coulissante (28) de la surface d'appui mobile (24), à proximité de l'extrémité longitudinale (37) de jonction de celle-ci, pour presser la plaque (12) de tissu entre la quatrième barrette (52) de bridage et la surface d'appui mobile (24).

13. Gabarit selon l'une quelconque des revendications 7 à 12, **caractérisé en ce que** les lames coulissantes (28, 33, 44) sont entraînées en coulissement transversal par des vérins (30).

## Patentansprüche

1. Verfahren zur Formgebung eines mit der Karosserie eines Kraftfahrzeuges verbundenen Bauteils, insbesondere eines Halteteils für mechanische Anordnungen oder eines Bauteils, das mit dem Boden des Fahrzeugs verbindbar ist, wobei das Bauteil hergestellt wird ausgehend von einer ebenen Ausgangsplatte (12), die ein Gewebe (14) aus in Längsrichtung zueinander parallelen Verbundfasern (16) aufweist, die miteinander durch quer verlaufende Bänder (18) verbunden sind und das einen ersten Schritt aufweist, in dem die Ausgangsplatte (12) mit einem thermoplastischen Bindemittel getränkt wird, einen zweiten Schritt aufweist, in dem die Platte (12) auf eine vorgeheizte Schablone (20) aufgelegt wird, einen dritten Schritt aufweist, in dem die Platte (12) auf die Umgebungstemperatur abgekühlt wird, einen vierten Schritt aufweist, in dem die Platte (12) auf das gewünschte Mass zugeschnitten wird und einen fünften Schritt aufweist, in dem die Platte (12) in eine Form eingelegt wird um so das endgültige Bauteil auszubilden, wobei der zweite Schritt des Verfahrens wenigstens einen Vorgang der senkrechten Verformung der Platte aufweist sowie wenigstens einen Vorgang der seitlichen Auslenkung der Fasern (16) um dadurch während des vierten Schrittes des Verfahrens einen Zuschnitt zu ermöglichen im wesentlichen parallel zur Richtung (L) der Fasern (16) zu ermöglichen.

2. Verfahren nach dem vorhergehenden Anspruch, **dadurch gekennzeichnet, dass** die senkrechte Verformung der Platte (12) durch Auflage der Platte auf eine Schablone (20) erfolgt, die die Form wenigstens eines geraden Prismas aufweist, dass sich im allgemeinen in Querrichtung (T) erstreckt.

3. Verfahren nach einem der vorhergehenden Ansprüche, **dadurch gekennzeichnet, dass** die Auslenkung der Fasern (16) in Querrichtung dadurch erfolgt, dass wenigstens zwei getrennte Abschnitte der Platte (12), die sich jeweils in Querrichtung (T) erstrecken, auf einem feststehenden Auflagebereich (22) bzw. auf einem beweglichen Auflagebereich (24) der Schablone (20) eingespannt werden, wobei der bewegliche Auflagebereich (24) zumindest parallel zum feststehenden Auflagebereich (22) verschoben wird um dadurch die zwischen den beiden Abschnitten vorhandenen Fasern (16) in Querrichtung (T) zu biegen.

4. Verfahren nach Anspruch 3,**dadurch gekennzeichnet, dass** die beiden getrennten Abschnitte der Platte (12) während des Vorgangs der Auslenkung der Fasern (16) in Querrichtung in Längsrichtung aneinander angenähert werden.

5. Verfahren nach einem der vorhergehenden Ansprüche, **dadurch gekennzeichnet, dass** die Ausgangsplatte (12) aus einem Stapel von Gewebeschichten (14) besteht, die von Geweberollen der gleichen Art stammen.

6. Verfahren nach einem der vorhergehenden Ansprüche, **dadurch gekennzeichnet, dass** der Zuschnitt der Platte (12) während des vierten Schrittes mittels eines mit Ultraschall arbeitenden Schneidwerkzeuges erfolgt.

7. Schablone (20) zur Formgebung eines mit der Karosserie eines Fahrzeugs verbundenen Bauteils, insbesondere eines Halteteils für mechanische Anordnungen oder eines Bauteils zur Verbindung mit dem Boden des Fahrzeugs, wobei das Bauteil hergestellt ist ausgehend von einer waagrechten Ausgangsplatte (12), die ein Gewebe aus parallelen sich in der gleichen Längsrichtung (L) erstreckenden Verbundfasern (16) aufweist und die miteinander über quer verlaufende Bänder (18) verbunden sind, wobei die Ausgangsplatte (12) mit einem thermoplastischen Bindemittel getränkt wird, danach auf die aufgeheizte Schablone (20) aufgelegt wird, anschliessend auf die Umgebungstemperatur abgekühlt wird um einen Rohling zu bilden, danach zugeschnitten wird und schliesslich in eine Form eingelegt wird um das endgültige Bauteil zu bilden, wobei die Schablone (20) eine Anordnung von nebeneinander liegenden parallelen Lamellen (26, 28, 29, 33, 44) aufweist sowie wenigstens eine in Querrichtung gleitende Lamelle (33), auf denen die Platte (12) eingespannt wird und wobei die Lamellen (29,33) derart ausgestaltet sind, dass sie wenigstens den beiden oberen Seitenflächen wenigstens eines geraden Prismas in der allgemeinen Querrichtung (T) entsprechen.

8. Schablone (20) nach Anspruch 7, **dadurch gekennzeichnet, dass** sie einen feststehenden Auflagebereich (22) aufweist, der aus einer Vielzahl von feststehenden Lamellen (26, 29) besteht und wenigstens einen beweglichen Auflagebereich (24) aufweist, der zum feststehenden Auflagebereich (22) benachbart ist und der aus einer Vielzahl von parallelen relativ zueinander in Querrichtung (T) gleitenden Lamellen (28, 33, 44) besteht, wobei die feststehenden Lamellen (26, 29) und die gleitenden Lamellen ( 28, 33, 44), im Querschnitt gesehen, im wesentlichen entlang eines Profils (C) mit vorgegebener Krümmung angeordnet sind.

9. Schablone (20) nach Anspruch 8, **dadurch gekennzeichnet, dass** der feststehende Auflagebereich (22) an seinen Längsenden erste quer verlaufende Spannbügel (34) aufweist, die sich über den gesamten feststehenden Auflagebereich (22) erstrecken und die die Platte (12) aus Gewebe zwischen den ersten Spannbügeln (34) und dem feststehenden Auflagebereich (22) einspannen.

10. Schablone (20) nach einem der Ansprüche 8 oder 9, **dadurch gekennzeichnet, dass** der bewegliche Auflagebereich (24) zumindest aufweist:
- an seinem Längsende (37), das der Verbindung mit dem feststehenden Auflagebereich dient, wenigstens einen zweiten quer verlaufenden Spannbügel (38), der sich über den beweglichen Auflagebereich (24) erstreckt und die Platte (12) aus Gewebe zwischen dem zweiten Spannbügel (38) und dem beweglichen Auflagebereich (24) einspannt sowie
- an seinem freien Längsende (42) wenigstens einen dritten quer verlaufenden Spannbügel (40), der sich über den beweglichen Auflagebereich (24) erstreckt um die Platte (12) aus Gewebe zwischen dem dritten Spannbügel (40) und dem beweglichen Auflagebereich (24) einzuspannen.

11. Schablone (20) nach einem der Ansprüche 8 bis 10, **dadurch gekennzeichnet, dass** die parallelen gleitenden Lamellen (28, 33, 44) in Längsrichtung zueinander verschiebbar sind zwischen zwei Endstellungen, in denen sie voneinander getrennt bzw. miteinander verbunden sind.

12. Schablone (20) nach Anspruch 11, **dadurch gekennzeichnet, dass** der bewegliche Auflagebereich (24) wenigstens einen vierten in Querrichtung verlaufenden Spannbügel (52) aufweist, der sich in Querrichtung über eine parallele gleitende Lamelle (28) des beweglichen Auflagebereichs (24) erstreckt und in der Nähe des Längsendes (37) ihrer Verbindung angeordnet ist um die Platte (12) aus Gewebe zwischen dem vierten Spannbügel (52) und dem beweglichen Auflagebereich (24) einzuspannen.

13. Schablone nach einem der Ansprüche 7 bis 12, **dadurch gekennzeichnet, dass** die Verschiebung der gleitenden Lamellen (28, 33, 44) in Querrichtung durch Druckzylinder (30) erfolgt.

## Claims

1. Method for shaping an element connected to the body of an automotive vehicle, particularly an element for supporting mechanical members or an element for connecting to the floor of the vehicle, of the type in which the element is produced from an initial horizontal sheet (12) that comprises a fabric (14) of parallel longitudinal composite fibres (16) that are bonded together by transverse bonds (18), of the type comprising a first step during which the initial sheet (12) is impregnated with a thermoplastic bonding agent, a second step during which the sheet (12) is applied to a heated jig (20), a third step during which the sheet (12) is cooled to the ambient temperature, a fourth step during which the sheet is cut to a desired shape, and a fifth step during which the sheet (12) is placed in a mould in order to configure the definitive element, a method wherein the second step of the method comprises at least one operation of vertical re-shaping of the sheet and at least one operation of transverse distortion of the fibres (16) in order to allow cutting substantially parallel to the direction (L) of the fibres (16) in the fourth step of the method.

2. Method according to the preceding claim, **characterised in that** the vertical re-shaping of the sheet (12) is obtained by applying the sheet to a jig (20) having the shape of at least a straight prism of generally transverse direction (T).

3. Method according to any one of the preceding claims, **characterised in that** the transverse distortion of the fibres (16) is obtained by clamping, respectively with respect to a fixed bearing surface (22) and a moveable bearing surface (24) of the jig (20), at least two distinct zones of the sheet (12) that each follow a transverse direction (T), the moveable bearing surface (24) being displaced at least parallel to the fixed bearing surface (22) in order to bend the fibres (16) between the two zones in the transverse direction (T).

4. Method according to claim 3, **characterised in that** the two distinct zones of the sheet (12) are brought together with respect to one another during the operation of transverse distortion of the fibres (16).

5. Method according to any one of the preceding claims, **characterised in that** the initial sheet (12) is constituted by a pile of layers (14) of fabric from rolls of fabric of the same type.

6. Method according to any of the preceding claims, **characterised in that** the cutting of the sheet (12) during the fourth step is done by an ultrasound cutting tool.

7. Jig (20) for the shaping of an element connected to the body of an automotive vehicle, particularly an element for supporting mechanical members or an element for connecting to the floor of the vehicle, of the type in which the element is produced from an initial horizontal sheet (12) that comprises a fabric of parallel composite fibres (16) having the same longitudinal direction (L) that are bonded to one another by transverse bonds (18), of the type in which the initial sheet (12) is impregnated with a thermoplastic bonding agent, then applied to the heated jig (20), then cooled to the ambient temperature in order to form a blank, then cut to a desired shape, and lastly placed in a mould in order to configure the definitive element, the jig (20) comprising a juxtaposition of parallel blades (26, 28, 29, 33, 44), comprising at least one fixed blade (29) and at least one blade (33) sliding transversely, upon which the sheet (12) is clamped, the blades (29, 33) being arranged according to at least two upper facets of at least one straight prism of generally transverse direction (T).

8. Jig (20) according to claim 7, **characterised in that** it comprises a fixed bearing surface (22) constituted by a plurality of fixed blades (26, 29) and at least one moveable bearing surface (24) adjacent to the fixed bearing surface (22), constituted by a plurality of parallel blades (28, 33, 44) sliding with respect to one another in the transverse direction (T), the fixed blades (26, 29) and the sliding blades (28, 33, 44) being arranged, in longitudinal section, substantially according to a defined curvature profile (C).

9. Jig (20) according to claim 8, **characterised in that** the fixed bearing surface (22) comprises at its longitudinal ends first transverse clamping bars (34) that extend over the whole of the fixed bearing surface (22) in order to press the sheet (12) of fabric between the first bars (34) and the fixed bearing surface (22).

10. Jig (20) according to one of claims 8 or 9, **characterised in that** the moveable bearing surface (24) comprises at least:
- at its longitudinal end (37) adjoining the fixed bearing surface (22), at least a second transverse clamping bar (38) that extends over the moveable bearing surface (24) in order to press the sheet (12) of fabric between the second clamping bar (38) and the moveable bearing surface (22), and
- at its free longitudinal end (42), at least a third transverse clamping bar (40) that extends over the moveable bearing surface (24) in order to press the sheet (12) of fabric between the third clamping bar (40) and the moveable bearing surface (24).

11. Jig (20) according to any one of claims 8 to 10, **characterised in that** the parallel sliding blades (28, 33, 44) are moveable longitudinally with respect to one another between two positions in which respectively they are not joined together and are joined together.

12. Jig (20) according to claim 11, **characterised in that** the moveable bearing surface (24) comprises at least a fourth transverse clamping bar (52) that extends transversely over a parallel sliding blade (28) of the moveable bearing surface (24) in the proximity of the longitudinal adjoining end (37) thereof, in order to press the sheet (12) of fabric between the fourth clamping bar (52) and the moveable bearing surface (24).

13. Jig according to any one of claims 7 to 12, **characterised in that** the sliding blades (28, 33, 44) are made to slide transversely by actuators (30).
